# EUROPÄISCHE PATENTSCHRIFT

(11) **EP 0 583 701 B1**
(45) Veröffentlichungstag und Bekanntmachung des Hinweises auf die Patenterteilung: **30.10.1996**
(21) Anmeldenummer: 93112611.4
(22) Anmeldetag: 06.08.1993
(51) Int. Cl.: H02G 3/26

(54) **Schwenkbare Konsole**
Pivotable bracket
Console pivotante

(30) Priorität: 17.08.1992 CH 2559/92
(43) Veröffentlichungstag der Anmeldung: 23.02.1994
(73) Patentinhaber: LANZ OENSINGEN AG, 4702 Oensingen (CH)
(72) Erfinder: Mühlethaler, Erhard, CH-3314 Schalunen (CH)
(74) Vertreter: OK pat AG

(56) Entgegenhaltungen:
- DE-U- 7 306 928
- DE-U- 8 420 906

## Beschreibung

Die Erfindung betrifft eine schwenkbare Konsole mit einem Ausleger und einem der Befestigung dienenden Wandhalter, wobei der Ausleger über eine Schwenkachse mit dem Wandhalter verbunden und in verschiedenen Schwenklagen arretierbar ist.

Eine Konsole dieser Art gemäß dem Oberbegriff des Anspruchs 1 ist aus DE-U-73 06 928 bekannt.

Solche Konsolen dienen in der Installationstechnik dazu, langgestreckte Gegenstände wie Kabelbahnen, Leitungen aller Art, Rohre, Kanäle und dergleichen zu tragen, wobei natürlich eine Vielzahl solcher Konsolen, entsprechend der Länge der zu verlegenden Gegenstände, notwendig sind. Die Befestigung der Konsolen erfolgt mittels der Wandhalter an Wänden oder Decken (in letzterem Fall auch als "Hängestiele" bezeichnet), oder an Säulen, Stützen, Montageprofilen, Unterzügen usw.

Bei genau vertikaler oder horizontaler Befestigung des Wandhalters werden starre Konsolen mit vom Wandhalter rechtwinklig abstehendem Ausleger verwendet. Häufig erfolgt jedoch eine Montage an geneigten Stützen oder Streben, an Tunnelwänden, Gewölben usw., wobei zwecks (normalerweise horizontaler oder vertikaler) Ausrichtung des Trägers schwenkbare Konsolen der eingangs genannten Art erforderlich sind.

Bekannte Konstruktionen dieser Art verwenden meist eine am Wandhalter abstehende Platte, die das Schwenklager (z.B. in Gestalt einer horizontal gerichteten Schraube) aufnimmt und einen um dessen Achse gebogenen, im Abstand von ihm angeordneten Schlitz aufweist, in welchem eine in einer Bohrung der Konsole sitzende Feststellschraube geführt ist. Durch Anziehen dieser Feststellschraube kommt jedoch nur eine kraftschlüssige Verbindung zwischen Wandhalter und Konsole zustande, weil die die Konsole belastenden Kräfte an der Feststellschraube immer in der Längsrichtung des genannten, gebogenen Schlitzes wirken. Auch gegen seitliche Belastungen (in der Längsrichtung z.B. von Kabeln) bietet die flache, geschlitzte Platte kaum genügend Widerstand. Ausserdem ergeben sich infolge von Spiel im Schwenklager und von Fertigungstoleranzen keine definierten Endanschläge, wie sie z.B. für 45°- und 90°- Neigung erwünscht wären. Die (nur) kraftschlüssige Verbindung (mit festgezogenen Schrauben) bietet auf die Dauer, bei auftretenden Vibrationen usw. keine Sicherheit, weshalb jedenfalls für höhere Konsolen-Belastungen eine Heftschweissung vorgeschrieben wird. Letztere ist aber insbesondere auf der Baustelle - nach erfolgter Montage und Neigungseinstellung - sehr umständlich und kostspielig und muss zudem gegen Korrosion geschützt werden.

Mit der Erfindung soll eine schwenkbare Konsole vorgeschlagen werden, welche die erwähnten Mängel bekannter Ausführungen vermeidet. Insbesondere soll eine einfachere, stufenlose Neigungseinstellung und eine dauerhafte Sicherheit auch bei hohen Belastungen der Konsole gewährleistet sein, ohne dass eine Schweissverbindung (oder eine andere unlösbare Fixierung) erforderlich ist.

Diese Aufgabe wird durch die im Patentanspruch 1 gekennzeichnete Erfindung gelöst. Dementsprechend ist ein Kopfteil der Konsole, der mit dem Ausleger verbunden ist, einerseits über die Schwenkachse mit dem Wandhalter verbunden, aber anderseits, im Abstand zur Schwenkachse, auch über ein vom Kopfteil abstehendes, in seiner wirksamen Länge einstellbares Verstellorgan.

Damit wird über das Verstellorgan immer eine formschlüssige Verbindung hergestellt - bei beliebigem Neigungswinkel entsprechend der Längeneinstellung des Verstellorgans - so dass auch hohe Konsolen-Belastungen sicher aufgenommen und auf den Wandhalter übergeleitet werden.

Besondere, zweckmässige Ausgestaltungen des Erfindungsgegenstandes sind in den abhängigen Ansprüchen angegeben.

Ein Ausführungsbeispiel der erfindungsgemässen schwenkbaren Konsole wird nachstehend in Verbindung mit der Zeichnung näher beschrieben. Es zeigen:
- Fig. 1: eine erste Seitenansicht der Konsole (teilweise geschnitten), in einer Einstellung für Montage an einer senkrechten Wand,
- Fig. 2: eine Draufsicht der Konsole nach Fig. 1,
- Fig. 3: eine zweite Seitenansicht, in einer Einstellung mit geneigtem Ausleger (bzw. zur Montage an einer geneigten Wand o.dgl.), und
- Fig. 4: etwas vereinfacht eine Variante der Konsole nach Fig. 1 bis 3, an einer Decke hängend montiert.

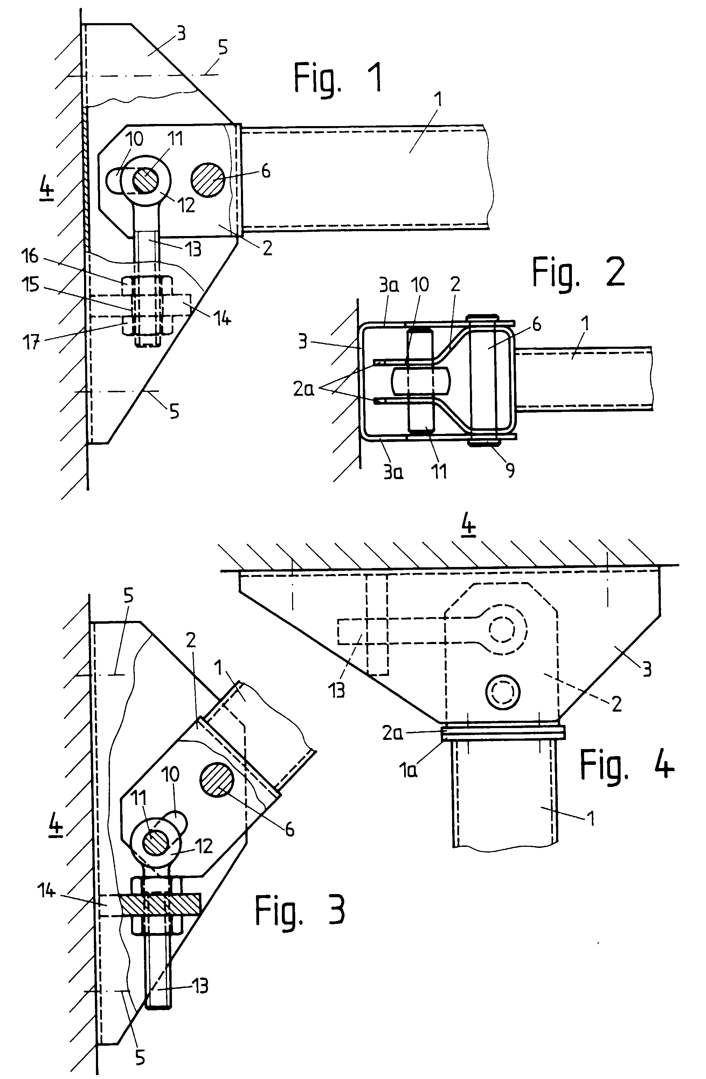

Die dargestellte Anordnung weist einen lastaufnehmenden Ausleger 1 (Konsole) auf, vorzugsweise in Form eines Vierkant-Hohlprofils. Mit dem einen Ende (links in Fig. 1) ist die Basis eines Kopfteils 2 fest verbunden, welcher als U-Profil gestaltet ist. Der Kopfteil 2 ist auf weiter unten beschriebene Weise mit einem Wandhalter 3 verbunden. Dieser ist ebenfalls durch ein U- Profil gebildet, wobei der Abstand der seitlichen Profilschenkel 3a so bemessen ist, dass der Kopfteil 2 dazwischen passt (Fig. 2). Der Wandhalter 3 dient zur Befestigung der schwenkbaren Konsole an einer Wand 4, einer Stütze oder Decke usw., wie mit oberen und unteren Achsen 5 in Fig. 1 und 3 angedeutet.

Der Kopfteil 2 ist mit dem Wandhalter 3 über einen Bolzen 6 schwenkbar verbunden, d.h. der Bolzen dient als Schwenkachse für den Ausleger 1. Der Bolzen 6 führt durch Bohrungen im Kopfteil 2 und im Wandhalter 3 hindurch und ist durch geeignete Mittel 9 axial gesichert. Der Bolzen 6 und die genannten Bohrungen befinden sich am Kopfteil in unmittelbarer Nachbarschaft des Auslegers 1, also am einen Ende des Kopfteiles 2. Am andern Ende ist in jedem Schenkel des gabelförmigen Kopfteiles ein Langloch 10 so angeordnet, dass es in der verlängerten Längsmittelachse des Auslegers 1 verläuft. In diesen Langlöchern 10 gleitet ein weiterer Bolzen 11 (Fig. 2), welcher eine zweite Schwenkachse bildet. Der Bolzen 11 trägt einen Kopf 12 eines Verstellorgans, hier in Form einer Gewindestange 13, die nach unten ragt und durch eine Durchgangsbohrung 15 einer im Wandhalter 3 angebrachten Lagerplatte 14 hindurchführt. Die Lagerplatte 14 ist mit dem Wandhalter 3 starr verbunden, z.B. verschweisst oder vernietet und bildet so eine starre Stütze. Die Gewindestange 13 (in Form einer Augenschraube mit Oese 12) wird in ihrer jeweiligen Lage durch zwei Muttern 16, 17 gesichert, die beidseits der Lagerplatte 14 gegen diese festgezogen sind. Auf diese Weise ist der Ausleger 1 gegen Verschwenken nach oben oder nach unten blockiert.

Das Verschwenken des Auslegers 1 aus seiner in Fig. 1 dargestellten Lage (90° zum Wandhalter 3 bzw. zur Wand 4) in eine andere Lage erfolgt durch Lösen und anschliessendes Drehen der Muttern 16, 17 entlang der Gewindestange 13. Da der Wandhalter wie erwähnt ein U-Profil ist, ist er auf der in den Figuren 1 und 3 rechten Seite offen, und die Muttern sind damit leicht zugänglich. Ist die gewünschte Schwenklage erreicht, so werden die beiden Muttern wieder angezogen. Während dem Verstellen der Gewindestange 13 bzw. beim Verschwenken des Auslegers 1 verschiebt sich der Bolzen 11 in den Langlöchern 10 aus der in Fig. 1 gezeigten Endlage heraus. Die andere Endstellung und damit die Länge dieser Langlöcher 10 richtet sich nach dem gewünschten Schwenkbereich des Auslegers 1 relativ zur Wand 4; im vorliegenden Ausführungsbeispiel ist dies ein Winkel von 45° nach oben, wie in Fig. 3 dargestellt. Soll der Ausleger jedoch unter 45° nach unten ragen, wird einfach die ganze Konsole um 180° gedreht an der Wand 4 montiert.

Wie aus diesen Ausführungen ersichtlich, erfolgt die Kraftübertragung von der auf dem Ausleger 1 liegenden Last auf den Wandhalter 3 und damit auf die Wand 4 einwandfrei formschlüssig, nämlich über den Bolzen 11 und die Augenschraube 12, 13 einerseits und natürlich auch über den Bolzen 6. Somit ist eine äusserst einfach und kostengünstig herzustellende und leicht einstellbare Einrichtung geschaffen. Die Vorteile erkennt man vor allem, wenn man die Fig. 3 in einer solchen Lage betrachtet, dass der Ausleger 1 horizontal liegt und die Wand 4 "überhängend" geneigt ist, wie z.B. bei einem Tunnelgewölbe. Der Zweck der Erfindung besteht ja darin, den Ausleger auch an einer solchen Wand (oder z.B. an einer geneigten Strebe) anbringen und bezüglich Neigung einstellen zu können, ohne ihn irgendwie konstruktiv ändern zu müssen. Durch die dargestellte Abstützung in jeder Lage mittels der Gewindestange 13 und den beiden Muttern 16, 17 wird zudem vermieden, dass sich der Ausleger 1 infolge Belastung oder Vibrationen mit der Zeit in seiner Lage verändern kann.

Zwecks günstigerer Lastübertragung vom Ausleger auf den Wandhalter bzw. Dimensionierung des Kopfteils 2 und des Bolzens 1 sind die Schenkel 2a des Kopfteils so abgekröpft, dass sie im Bereich des Bolzens 6 zwischen die Schenkel 3a des Wandhalters 3 passen, aber im Bereich des Bolzens 11, in welchem die Langlöcher 10 angebracht sind, einen geringeren Abstand haben, um gerade die Oese 12 seitlich zu führen. Die Belastung des Bolzens 11 wie auch des Kopfteils 2 wird dadurch wesentlich günstiger, so dass ein dünnerer Bolzen 11 verwendet werden kann. Dieser ist aber dennoch so lang, dass er zwischen den beiden Schenkeln 3a des Wandhalters 3 geführt und dadurch axial gesichert ist.

Die an einer Decke o. dgl. hängend montierte, etwas vereinfacht dargestellte Variante nach Fig. 4 entspricht im wesentlichen der vorstehend beschriebenen Ausführungsform, jedoch mit dem Unterschied, dass der Ausleger 1 mit dem Kopfteil 2 lösbar verbunden ist. Ausleger und Kopfteil sind hier je mit einer Flanschplatte 1a bzw. 2a versehen, die, wie angedeutet, miteinander verschraubt werden können. Dadurch kann der Ausleger nachträglich - nach Befestigung der Konsole an der Wand oder Decke - montiert werden, und insbesondere können verschiedene, z.B. verschieden lange Ausleger vorgesehen sein und nach Bedarf ausgetauscht werden.

## Patentansprüche

1. Schwenkbare Konsole mit einem Ausleger (1) und einem der Befestigung dienenden Wandhalter (3), wobei der Ausleger (1) über eine erste Schwenkachse (6) mit dem Wandhalter (3) verbunden und in verschiedenen Schwenklagen arretierbar ist und wobei ein mit dem Ausleger (1) verbundener Kopfteil (2) einerseits über die Schwenkachse (6) und anderseits im Abstand zur Schwenkachse über ein Verstellorgan (13) mit dem Wandhalter (3) verbunden ist, dadurch **gekennzeichnet,** dass das Verstellorgan (13) vom Kopfteil (2) absteht und in seiner wirksamen Länge einstellbar ist.

2. Schwenkbare Konsole nach Anspruch 1, dadurch gekennzeichnet, dass das Verstellorgan (13) eine Gewindestange ist, die am Kopfteil (2) mittels einer zweiten Schwenkachse (11) schwenkbar gelagert und in einer mit dem Wandhalter (3) verbundenen Stütze (14) axial längsverstellbar gehalten ist.

3. Schwenkbare Konsole nach Anspruch 2, dadurch gekennzeichnet, dass die Stütze (14) eine Lagerplatte ist, die eine die Gewindestange (13) aufnehmende Durchgangsbohrung (15) aufweist, wobei zwecks Längsverstellung zwei auf die Gewindestange (13) aufgeschraubte Muttern (15, 16) vorgesehen sind, die je an der Ober- und der Unterseite der Lagerplatte (14) anliegen.

4. Schwenkbare Konsole nach Anspruch 3, dadurch gekennzeichnet, dass die Gewindestange (13) eine Oese (12) aufweist, welche die zweite Schwenkachse (11) umfasst, wobei die letztere am Kopfteil (2) in Langlöchern (10) verschiebbar geführt ist.

5. Schwenkbare Konsole nach Anspruch 2, dadurch gekennzeichnet, dass der Wandhalter (3) durch ein U-Profil gebildet ist, deren Schenkel (3a) die erste Schwenkachse (6) lagern und die zweite Schwenkachse (11) gegen axiale Verschiebung im Kopfteil (2) sichern.

6. Schwenkbare Konsole nach Anspruch 2, dadurch gekennzeichnet, dass der Kopfteil (2) im wesentlichen ein U-Profil ist, dessen Basis mit dem Ausleger (1) verbunden ist und dessen Schenkel (2a) derart abgekröpft sind, dass sie im Bereich der ersten Schwenkachse (6) weiter voneinander entfernt sind als im Bereich der zweiten Schwenkachse (11).

7. Schwenkbare Konsole nach den Ansprüchen 4 und 6, dadurch gekennzeichnet, dass die Langlöcher (10) zur Lagerung der zweiten Schwenkachse (11) im Bereich des Kopfteils (2) mit dem geringeren Schenkelabstand angeordnet sind und eine solche Länge aufweisen, dass sich die zweite Schwenkachse (11) in der einen Schwenk-Endlage des Auslegers (1) gegen das eine Ende der Langlöcher (10) und in der anderen Schwenk-Endlage gegen das andere Ende der Langlöcher anlegt.

8. Schwenkbare Konsole nach einem der vorangehenden Ansprüche, dadurch gekennzeichnet, dass Kopfteil (2) und Ausleger (1) lösbar miteinander verbunden sind.

## Claims

1. Pivotable bracket having an extension arm (1) and a wall holder (3) serving for the fastening, the extension arm (1) being connected to the wall holder (3) by a first swivel axle (6) and being lockable in various swivel positions and a head part (2) connected to the extension arm (1) being connected to the wall holder (3) on the one hand by the swivel axle (6) and on the other hand, at a distance from the swivel axle, by an adjusting member (13), characterized in that the adjusting member (13) protrudes from the head part (2) and is adjustable in its effective length.

2. Pivotable bracket according to Claim 1, characterized in that the adjusting member (13) is a threaded rod, which is mounted pivotably on the head part (2) by means of a second swivel axle (11) and is held such that it is longitudinally adjustable in the axial direction in a support (14) connected to the wall holder (3).

3. Pivotable bracket according to Claim 2, characterized in that the support (14) is a bearing plate having a through-bore (15) for receiving the threaded rod (13), two nuts (15, 16) being provided for longitudinal adjustment purposes, which nuts are screwed onto the threaded rod (13) and bear respectively against the top and bottom side of the bearing plate (14).

4. Pivotable bracket according to Claim 3, characterized in that the threaded rod (13) has an eyelet (12) which enclasps the second swivel axle (11), the latter being guided displaceably on the head part (2) in elongate holes (10).

5. Pivotable bracket according to Claim 2, characterized in that the wall holder (3) is formed by a U-profile, the legs (3a) of which support the first swivel axle (6) and secure the second swivel axle (11) against axial displacement in the head part (2).

6. Pivotable bracket according to Claim 2, characterized in that the head part (2) is essentially a U-profile, the base of which is connected to the extension arm (1) and the legs (2a) of which are bent at right angles in such a way that they are further apart in the region of the first swivel axle (6) than in the region of the second swivel axle (11).

7. Pivotable bracket according to Claims 4 and 6, characterized in that the long holes (10) for the mounting of the second swivel axle (11) are disposed in the region of the head part (2) having the lesser leg spacing and are of such a length that the second swivel axle (11) comes to bear, in the one swivel end position of the extension arm (1), against the one end of the long holes (10) and in the other swivel end position against the other end of the long holes.

8. Pivotable bracket according to one of the preceding claims, characterized in that head part (2) and extension arm (1) are detachably interconnected.

## Revendications

1. Console pivotante comportant un bras en console (1) et un support mural (3) servant à la fixation, et dans laquelle le bras en console (1) est relié au support mural (3) par l'intermédiaire d'un premier axe de basculement (6) et peut être bloqué dans différentes positions basculées, et dans laquelle une partie de tête (2) reliée au bras en console (1) est reliée au support mural (3) d'une part par l'intermédiaire de l'axe de basculement (6) et d'autre part, à distance de l'axe de basculement, par l'intermédiaire d'un organe de réglage (13), caractérisée en ce que l'organe de réglage (13) fait saillie par rapport à la partie de tête (2) et en ce que sa longueur active est réglable.

2. Console pivotante selon la revendication 1, caractérisée en ce que l'organe de réglage (13) est une tige filetée qui est montée de manière à pouvoir basculer sur la partie de tête (2) au moyen d'un second axe de basculement (11) et est retenue, de manière à être déplaçable selon un déplacement axial longitudinal, dans un support (14) relié au support mural (3).

3. Console pivotante selon la revendication 2, caractérisée en ce que le support (14) est une plaque de support qui possède un perçage traversant (15) qui reçoit la tige filetée (13), tandis que pour le déplacement longitudinal sont prévus deux écrous (15,16), qui sont vissés sur la tige filetée (13) et s'appliquent respectivement contre la face supérieure et la face inférieure de la plaque de support (14).

4. Console pivotante selon la revendication 3, caractérisée en ce que la tige filetée (13) possède un oeillet (12) qui entoure le second axe de basculement (11), cet axe étant guidé en étant déplaçable dans des trous allongés (10) de la partie de tête (2).

5. Console pivotante selon la revendication 2, caractérisée en ce que le support mural (3) est formé par un profilé en U dont les branches (3a) supportent le premier axe de basculement (6) et bloquent le second axe de basculement (11) contre un déplacement axial dans la partie de tête (2).

6. Console pivotante selon la revendication 2, caractérisée en ce que la partie de tête (2) est essentiellement un profilé en U dont la base est reliée au bras en console (1) et dont les branches (2a) sont coudées de telle sorte qu'elles sont plus écartées l'une de l'autre dans la zone du premier axe de basculement (6) que dans la zone du second axe de basculement (11).

7. Console pivotante selon les revendications 4 et 6, caractérisée en ce que les trous allongés (10) servant à supporter le second axe de basculement (11) sont disposés dans la zone de la partie de tête (2) en étant séparés par la faible distance entre les branches et possèdent une longueur telle que, lorsque le bras en console (1) est dans une position extrême basculée, le second axe de basculement (11) s'applique contre une extrémité des trous allongés (10) et, dans l'autre position extrême de basculement, s'applique contre l'autre extrémité des trous allongés.

8. Console pivotante selon l'une des revendications précédentes, caractérisée en ce que la partie de tête (2) et le bras en console (1) sont reliés entre eux de façon amovible.
